# FASCICULE DE BREVET EUROPEEN

(11) **EP 1 883 689 B1**
(45) Date de publication et mention de la délivrance du brevet: **15.01.2014**
(21) Numéro de dépôt: 06794453.8
(22) Date de dépôt: 23.05.2006
(51) Int. Cl.: C10B 53/02, C10B 49/04, A62D 3/00, B27K 3/00

(54) **PROCEDE DE DISTILLATION DE PRODUITS SOLIDES ORGANIQUES**
VERFAHREN ZUM DESTILLIEREN VON FESTEN ORGANISCHEN PRODUKTEN
METHOD FOR DISTILLING SOLID ORGANIC PRODUCTS

(30) Priorité: 23.05.2005 FR 0551335
(43) Date de publication de la demande: 06.02.2008
(73) Titulaire: Areva Renouvelables, 92400 Courbevoie (FR)
(72) Inventeur: HERY, Jean-Sébastien, F-33200 Bordeaux (FR)
(74) Mandataire: Jacobson, Claude
(86) Numéro de dépôt international: PCT/FR2006/050471
(87) Numéro de publication internationale: WO 2007/000548

(56) Documents cités:
- WO-A-96/38515
- J. HERY: "A complete industrial process to recycle CCA-treated wood" ENVIRONMENTAL IMPACTS OF PRESERVATIVE-TREATED WOOD, [Online] 8 février 2004 (2004-02-08), pages 313-322, XP002346050 Orlando, Florida, USA Extrait de l'Internet: URL:http://www.ccaconference.org/pre/docum ent/Fl_Env_Cent_Treated_Wood_Proceedings2. pdf> [extrait le 2005-09-21]
- HELSEN L ET AL: "Total recycling of CCA treated wood waste by low-temperature pyrolysis" WASTE MANAGEMENT, ELSEVIER, NEW YORK, NY, US, vol. 18, no. 6-8, octobre 1998 (1998-10), pages 571-578, XP004158825 ISSN: 0956-053X

## Description

L'invention se rattache au secteur technique du recyclage des solides organiques, et en particulier au recyclage des bois souillés, y compris ceux traités au CCA (cuivre, chrome, arsenic) qui sont notamment utilisés pour des applications telles que poteaux électriques, poteaux téléphoniques, mais aussi dans toutes autres applications telles que déchets agricoles, par exemple.

Dans l'application spécifique du recyclage des bois souillés, un procédé de traitement des bois a ainsi été développé dans le cadre du brevet EP 772663 qui est la propriété du Demandeur. Ce procédé dénommé « CHARTHERM » met en oeuvre une combustion adiabatique définie dans les phases suivantes.

Les bois traités sont broyés sous forme de copeaux de bois pour être introduits dans un réacteur de grande hauteur et formant colonne, d'une part, de combustion dans sa partie basse et, d'autre part, de refroidissement dans sa partie haute. Dans la partie basse du réacteur, les copeaux sont soumis à une combustion adiabatique provoquée par des gaz chauds à faible teneur en oxygène et à une température de l'ordre de 400° C, la masse de copeaux situés au-dessus de la zone de combustion se chargeant de la chaleur excédentaire transportée par les gaz en provoquant un refroidissement progressif de ces gaz jusqu'à atteindre une température inférieure à 65° C, en formant un gradient inverse de température, et en provoquant une condensation qui, au contact des copeaux, dépose sur eux les particules notamment métalliques, goudron et vapeur, que les gaz de combustion détiennent. Les gaz de combustion non compressibles déchargés de tous métaux lourds sont évacués hors du réacteur. La teneur en oxygène des gaz de combustion introduits dans la partie basse du réacteur est très faible pour éviter l'inflammation des copeaux, et augmenter l'effet réducteur. Le charbon de bois obtenu de la combustion des copeaux inclut la réduction des métaux lourds et autres éléments polluants en vue d'un recyclage dans d'autres applications de traitement.

L'installation de mise en oeuvre du procédé « CHARTHERM » est agencée comme suit :

Le réacteur composé d'une colonne inclut de bas de haut de la colonne :
- un cendrier étanche équipé d'un système d'évacuation des cendres,
- une entrée des gaz chauds situés dans la partie basse du réacteur,
- une grille oscillante permettant d'évacuer les produits carbonisés et d'organiser par effets vibratoires un écoulement vers le bas des copeaux de bois,
- une zone de refroidissement et de filtrage des gaz établie au-dessus de la zone de combustion,
- une entrée étanche d'alimentation de copeaux de bois située dans la partie haute du réacteur,
- au même niveau de cette dernière, une sortie des gaz de combustion protégée par une grille destinée à éviter l'envol des copeaux et des moyens de répartition radiale uniforme des copeaux.

Le procédé en lui-même met en oeuvre les phases suivantes :
- introduction des matériaux traités broyés sous forme de copeaux dans un réacteur formant colonne ;
- combustion desdits matériaux dans la partie basse du réacteur en appui sur une grille oscillante et refroidissement dans sa partie haute ;
- introduction dans la partie basse du réacteur de gaz chauds à faible teneur en oxygène et transfert des gaz dans la colonne du réacteur avec circuit de recyclage des gaz incorporant un générateur d'air chaud, un brûleur, un compresseur et un dispositif intercalaire de lavage de fumées et gaz recyclés ;
- évacuation des masses de matériaux traités se trouvant à l'état de résidus dans la partie basse des réacteurs par la commande de la grille mobile.

Des publications ont été faites par l'inventeur de la présente demande en rapport avec EP 772663 à savoir: J. HERY: "A complete industrial process to recycle CCA-treated wood" ENVIRONMENTAL IMPACTS OF PRESERVATIVE-TREATED WOOD, [Online] 8 février 2004 (2004-02-08), pages 313-322, XP002346050 Orlando, Florida, USA Extrait de l'Internet: URL:http://www.ccaconference.org/pre/docum ent/FLEnv_Cent_Treated_Wood_Proceedings2. pdf> [extrait le 2005-09-21] HELSEN L ET AL: "Total recycling of CCA treated wood waste by low-temperature pyrolysis" WASTE MANAGEMENT, ELSEVIER, NEW YORK, NY, US, vol. 18, no. 6-8, octobre 1998 (1998-10), pages 571-578, XP004158825 ISSN:0956-053X.

En pratique, le procédé tel que décrit donne des résultats d'exploitation intéressants avec l'obtention en final de cendres de charbon de bois.

Cependant, le Demandeur a voulu optimiser encore ce procédé dans un but bien précis, à savoir l'obtention en phase finale de produits collectés et réduits pouvant constituer une matière première secondaire, ce qui n'est nullement possible actuellement. Cette démarche du Demandeur a pour but aussi d'augmenter les capacités d'utilisation de l'installation mettant en oeuvre le procédé et donc d'améliorer encore sa productivité et sa rentabilité.

Selon une première caractéristique de l'invention, le procédé de traitement de matériaux solides organiques et notamment pour le recyclage des bois traités mettant en oeuvre les phases suivantes :
- introduction des matériaux traités broyés sous forme de copeaux dans une unité de réaction formant colonne ;
- chauffage desdits matériaux dans la partie basse de la colonne de réaction en appui sur une grille de translation et refroidissement dans sa partie supérieure ;
- introduction dans la partie basse de la colonne de réaction de gaz chauds à faible teneur en oxygène et transfert des gaz dans la colonne de réaction avec circuit de recyclage des gaz en sortie, incorporant un générateur de gaz chauds, un brûleur, un surpresseur et une réinjection des gaz recyclés ;
- évacuation des masses de matériaux traités se trouvant à l'état de produits carbonés dans la partie basse de la colonne de réaction par la commande de la grille mobile ;
le procédé étant remarquable en ce qu'il met en oeuvre une opération de distillation à partir de l'énergie apportée par les gaz chauds en bas de la colonne de réaction à une température Tl entre 170° C et 370° C qui assure la fonction de rupture des liaisons organiques dans les matériaux, et en ce que le procédé met en oeuvre au fur et à mesure de l'opération de distillation un contrôle constant entre la température (T1) des gaz chauds avant l'entrée dans la partie basse de la colonne de réaction et la température (T2) des matériaux se trouvant dans la zone immédiatement au-dessus de la grille de la colonne du réacteur, et la comparaison relative en continu desdites températures (T1 - T2), et en ce que lorsque les températures des gaz (T1) d'introduction et celle (T2) mesurée dans une étroite tranche de quelques centimètres de matériaux situés au-dessus de la grille, sont identiques, correspondant à la situation d'évacuation de tous les liens organiques des matériaux par évaporation et transport par les gaz chauds de bas en haut dans la colonne, on procède à l'évacuation de ladite tranche de matériau à ladite température (T1 = T2) pour collecter un produit composé en grande partie de carbone et constituant une matière première secondaire.

Ces caractéristiques et d'autres encore ressortiront bien de la suite de la description.

Pour fixer l'objet de l'invention illustrée d'une manière non limitative aux figures des dessins où :
- la figure 1 est une vue de l'installation de mise en oeuvre du procédé selon l'invention.

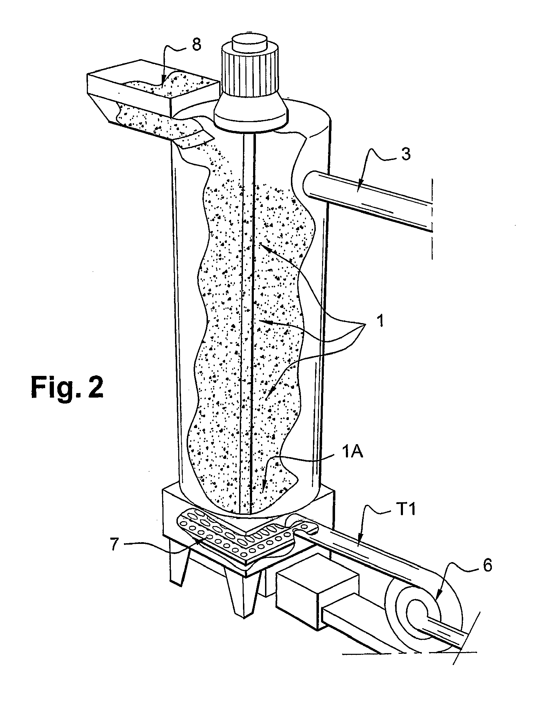

- la figure 2 est une vue en coupe de la colonne de réaction.
- la figure 3 est une vue à caractère schématique de la grille.

Afin de rendre plus concret l'objet de l'invention, on le décrit maintenant d'une manière non limitative illustrée aux dessins.

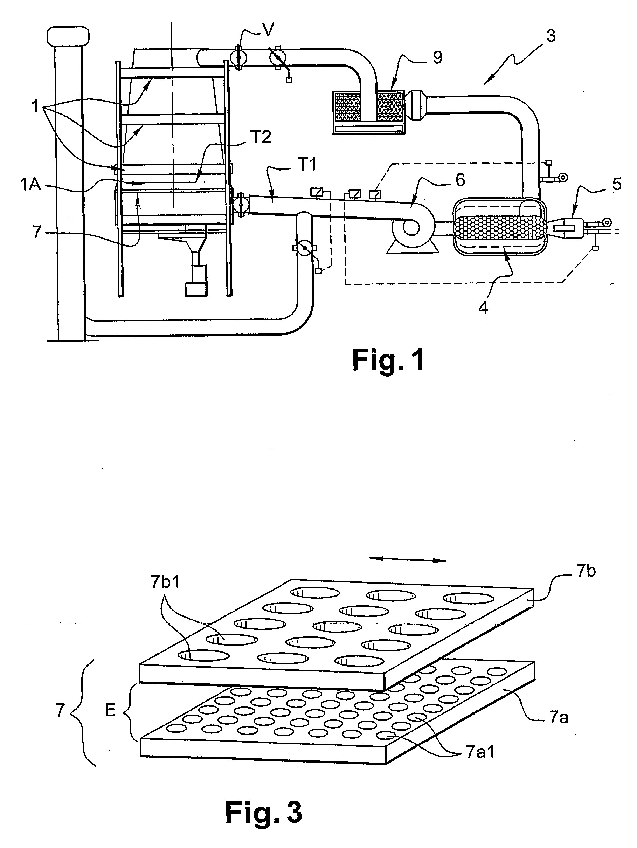

L'installation représentée de manière schématique figure 1 comprend une colonne de réaction sous forme de colonne (1) de grande hauteur dans laquelle sont acheminés par le haut à l'aide d'un convoyeur ou équivalent des copeaux préalablement broyés. Ces copeaux contiennent naturellement de par leur nature une forte proportion de carbone et d'autres minéraux ainsi qu'éventuellement des métaux lourds résultant de traitements apportés sur les produits initiaux pouvant être par exemple des poteaux en bois, utilisés en application téléphonique, ou électrique ou autres, ou des traverses de chemin de fer ou des fenêtres ou autres. La colonne de réaction (1) est ainsi intégrée, ainsi que décrit dans le brevet EP 772663, dans un circuit (3) d'émission et de circulation de gaz chauds, incluant un générateur de gaz chaud (4), un brûleur (5), un surpresseur (6), un dispositif intercalaire (9) de lavage de fumées et gaz recyclés. La base de la colonne de réaction est ainsi agencée avec une grille (7) mobile à translation disposée dans la partie basse de la colonne de réaction et permettant par un moyen de commande approprié d'évacuer des masses de matières spécifiques ainsi qu'il sera précisé par la suite.

Le matériau broyé introduit par une trémie (8) dans la colonne de réaction repose par gravité sur la grille précitée. Les gaz chauds et pauvres en oxygène sont ainsi introduits par la partie basse (1A) de la colonne de réaction et poussés dans cette colonne. La restriction à l'échappement des gaz, en haut de la colonne de réaction, combinée au flux de ces gaz et à la présence du matériau à l'intérieur du réacteur, provoquent une perte de charge entre la pression d'introduction des gaz en bas de la colonne de réaction et la pression de sortie des gaz en haut de la colonne. Cette perte de charge contrôlée provoque une dégressivité stratifiée des pressions qui s'accompagne dans le volume constant de la colonne d'une baisse de température depuis le bas de la colonne de réaction vers le haut de celle-ci.

Comparativement au procédé décrit dans le brevet EP 772663, la température d'introduction des gaz est plus basse se situant dans une gamme (T1) de 170 à 370° C en fonction du matériau introduit dans la colonne et dans le but de provoquer uniquement la cassure et l'évaporation des composants organiques du matériau qui sont par la suite distillés, refroidis et filtrés, cette température étant en tout cas inférieure à la température engendrant la combustion adiabatique selon le procédé initial.

Comparativement au procédé décrit dans le brevet EP 772663, mettant en oeuvre à l'intérieur une combustion adiabatique en vue de l'obtention de cendres, la présente invention met en oeuvre un procédé qui a pour but d'obtenir en phase finale un produit constitué en grande partie de carbone et pouvant être considéré comme une matière première secondaire, et cela grâce au défaut de combustion.

En pratique, le procédé selon l'invention diffère de l'art antérieur précité en ce qu'il met en oeuvre une opération de distillation à partir de laquelle l'énergie apportée par les gaz chauds en bas de la colonne de réaction est utilisée pour assurer une fonction particulière, à savoir la rupture des liaisons organiques dans les matériaux ou copeaux introduits dans la colonne du réacteur.

Ainsi, le procédé de distillation entraîne la rupture des liaisons organiques dans les copeaux et matériaux introduits dans la colonne de réaction en libérant les molécules organiques complexes qui en s'évaporant sont entraînés par le flux de gaz chauds vers le haut de la colonne de réaction. Ainsi au fur et à mesure les liens organiques se cassent au sein des matériaux et copeaux introduits dans la colonne de réaction. Parallèlement, selon une autre disposition importante de l'invention, le procédé met en oeuvre au fur et à mesure de l'opération de distillation un contrôle en continu constant par des moyens de mesure et de réglage approprié entre la température (T1) des gaz chauds avant l'entrée dans la partie basse de la colonne de réaction et la température (T2) des matériaux ou copeaux se trouvant au-dessus de la grille de la colonne de réaction. Cet espace est de l'ordre de 5 cm.

Le contrôle constant relatif et continu entre les températures (T1 - T2) permet ainsi d'identifier la différence de variation de la température des matériaux qui est variable avec celle des gaz chauds qui elle est constante. Lorsque les deux températures (T1) (T2) sont identiques, cela induit qu'il n'y a plus d'absorption d'énergie par rupture de liaisons organiques des matériaux et copeaux, et ainsi que tous les liens organiques des matériaux ont été évacués par évaporation et transport par les gaz chauds circulant de bas en haut dans la colonne du réacteur.

La température (T2) des matériaux ne dépasse et de doit pas dépasser la température (T1) des gaz. Le contrôle constant et continu des températures (T1 - T2) est inhérent au contrôle de la perte de charge entre le haut et le bas de colonne du réacteur pour que la chaleur ne se trouve pas dans le haut de la colonne, le maximum d'échanges devant se faire au niveau de la grille pour que le choc thermique soit brutal et ne garder que la matière minéralisée. Le contrôle de pression dans la partie basse de la colonne est effectué à l'aide d'une vanne (V) disposée dans la partie haute de l'installation en haut de la colonne du réacteur. Ainsi, plus on augmente la pression dans la partie basse de la colonne, plus la vanne (V) est fermée tout en laissant un passage de gaz pour le recyclage pour provoquer le plus de perte de charge possible et une meilleure stratification par tranches successives de matériaux en présence dans la colonne.

Ainsi, la tranche (A) de matériaux se situant dans la colonne de réaction en contact avec la grille est minéralisée par évaporation de ses composants organiques. L'épaisseur de cette tranche est de quelques centimètres et répond exactement aux conditions d'égalité des températures (T1) et (T2). En pratique, et selon les études et essais effectués, le matériau minéralisé obtenu est essentiellement à base de carbone.

Le procédé consiste alors à évacuer cette tranche de matériau minéralisé dont la partie organique a été distillée, par la partie basse de la colonne. La grille est mise en mouvement translationnel horizontal, ce qui provoque le dégagement des ouvertures qu'elle contient et l'évacuation verticale des matériaux qui reposent sur elle. De par cette évacuation du matériau minéralisé, la masse de matériau se trouvant dans la colonne s'affaisse et ce, dans un cycle continu. La colonne de réaction reçoit dans sa partie haute un volume de matériau nouveau égal à celui évacué.

Par ailleurs, dans le cas de l'optimisation du procédé, la colonne du réacteur est conique et est réduite vers le haut, comme représenté figure 1, en évitant le voutage de la charge, favorisant l'échange et la stratification. L'optimisation du procédé résulte aussi d'une mise en oeuvre particulière de la grille (7). Il faut, à cet effet, qu'elle soit en quelque sorte « transparente » avec un effet minimum quant à l'absorption de chaleur que génère la perte de charge. Pour cela, la grille est établie selon deux composants (7a - 7b), le composant (7a) situé dans la partie basse de la colonne (1) étant fixe avec une pluralité d'ouvertures (7a1) circulaires dans une configuration alvéolaire multiple. Le composant (7b) est mobile par rapport au composant (7a) et se trouve en légère surélévation par rapport à celui-ci grâce à des moyens de glissement du type galets ou similaires. Le composant (7b) prévoit des trous oblongs (7b1) qui chevauchent donc partiellement les ouvertures formées sur le composant fixe. L'épaisseur du composant (7b) est de l'ordre de 1 à 2 cm au plus. L'espace (E) entre les deux composants (7a - 7b) définit un coussin de gaz à lit fluidisé. La tranche (A) de matériau à température (T2) est donc disposée sur le composant (7b). La mobilité du composant (7b) est assurée par tous moyens, mécaniques ou autres, en translation pour assurer le mouvement permettant le transfert de la tranche (A) de matériau minéralisé vers le bas de la colonne du réacteur et son évacuation.

Ainsi, selon l'invention, pendant les phases opératoires du procédé de distillation selon l'invention, au sein de la colonne, les molécules organiques évaporées sont entraînées par le flux de gaz chauds vers le haut de cette colonne. Elles trouvent donc des températures plus faibles, et les molécules se re-condensent sur une paroi de matériau plus froid. Cependant, l'évacuation progressive et continue des tranches (A) de matériaux dont la température (T2) a atteint celle de (T1) des gaz chauds, va conduire par une nouvelle phase de réchauffage des molécules re-condensées à une nouvelle fragmentation ou cassure en s'évaporant à nouveau.

Cependant, les molécules organiques plus légères et plus fines vont s'élever plus haut dans la colonne de réaction et s'évaporer. On obtient ainsi un cycle continu alternatif avec des phases de re-condensation ou de réchauffage et fragmentation des molécules organiques. Celles-ci seront de plus en plus légères et plus fines pour s'évacuer vers le haut de la colonne du réacteur.

Les molécules organiques les plus légères se trouvant dans la partie haute de la colonne de réaction sont évacuées avec les gaz en vue de l'opération de recyclage de ceux-ci. Dans cette seconde situation, lesdites molécules organiques fines et légères restantes sont pour une grande partie des hydrocarbures combustibles.

Les gaz en sortie de la colonne de réaction sont acheminés vers une zone de lavage et de séchage inclus dans l'installation et vont être réintroduits dans le générateur de gaz chauds avec de l'air associé. Cela permet de brûler à haute température toutes les molécules organiques restant issues du processus de distillation précité. Accessoirement, le recyclage des gaz chargés de ces molécules organiques résultantes permet une alimentation du brûleur avec des combustibles légers issus de la distillation du matériau initial avec une économie d'énergie.

En se référant au procédé décrit dans le brevet EP 772.663 antérieur précité, le tube de ré-introduction des gaz chargés de ces molécules résiduelles dans la chaudière est agencé avec des ouvertures permettant l'introduction d'air frais en justes proportions de manière à maintenir en sortie du brûleur un gaz toujours pauvre en oxygène. Les gaz en sortie de ce générateur de gaz chauds incluant des gaz recyclés sont ainsi introduits dans la partie basse de la colonne de réaction.

Le procédé de distillation selon l'invention ainsi décrit offre de nombreux avantages par rapport au procédé initial. Les gaz chauds et neutres apportent une énergie thermique qui libère les molécules organiques du matériau initial introduit dans la colonne de réaction, et le contrôle des températures et des pressions dans la colonne permet d'avoir l'effet de distillation optimum. Les phases de re-condensation et de réchauffage des particules organiques qui sont successives et se répètent à de multiples reprises dans la colonne de réaction, permettent une distillation progressive et de plus en plus fine des molécules de manière à obtenir un matériau secondaire minéralisé. Ce dernier comporte suivant les matériaux de 60 à 98 % de carbone par rapport à son volume total, de 95 à 98 % dans le cas du bois.

Un autre avantage du procédé réside dans le fait que la température de process étant beaucoup plus basse que la température fusion des structures carbonées, le carbone du matériau secondaire minéralisé conserve la même structure cristalline naturelle que lors de sa formation en composé organique, c'est-à-dire une structure cristalline de type graphitique. Le carbone du matériau secondaire minéralisé est donc friable.

Un avantage supplémentaire du procédé réside dans le fait que les éventuels autres minéraux, autres que le carbone, qui ne sont liés à ce dernier de par des liaisons moléculaires organiques, en perdant ces liens, ont tendance à se grouper et à former des agglomérats indépendants de la structure carbonée.

La mise en oeuvre de l'invention dans cette version optimisée empêche toute combustion telle que décrite dans le brevet EP 772.663.

Les avantages combinés de la friabilité du carbone du matériau secondaire minéralisé et du phénomène d'agglomérat des autres minéraux, rend donc possible d'envisager de mettre en oeuvre un traitement ultérieur des matériaux minéralisés en vue de la fabrication de poudre de carbone selon un autre procédé développé par le Demandeur.

Ainsi, selon l'invention, le procédé de distillation va très au delà dans ses applications et performances que le procédé initial défini dans EP 772663. Le procédé de distillation permet un traitement des matériaux minéralisés en vue d'opération de valorisation et de récupération en vue d'obtenir l'équivalent d'une matière première le carbone, ce qui n'était pas possible de réaliser précédemment.

L'invention trouve de nombreuses applications pour le traitement des matériaux solides organiques, recyclage des bois traités, mais aussi, de manière surprenante, traitement de déchets agricoles, traitement de la fiente des volailles.

## Revendications

1. Procédé de traitement de matériaux solides organiques du type mettant en oeuvre les phases suivantes :
- introduction des matériaux traités broyés sous forme de copeaux dans une unité de réaction formant colonne ;
- chauffage desdits matériaux dans la partie basse de la colonne de réaction en appui sur une grille de translation et refroidissement dans sa partie supérieure ;
- introduction dans la partie basse de la colonne de réaction de gaz chauds à faible teneur en oxygène et transfert des gaz dans la colonne de réaction avec circuit de recyclage des gaz en sortie, incorporant un générateur de gaz chauds, un brûleur, un surpresseur et une réinjection des gaz recyclés ;
- évacuation des masses de matériaux traités se trouvant à l'état de produits carbonés dans la partie basse de la colonne de réaction par la commande de la grille mobile ;
**caractérisé en ce que** le procédé met en oeuvre une opération de distillation à partir de l'énergie apportée par les gaz chauds en bas de la colonne de réaction à une température (T1) entre 170° et 350° C qui assure la fonction de rupture des liaisons organiques dans les matériaux, et **en ce que** le procédé met en oeuvre au fur et à mesure de l'opération de distillation un contrôle constant entre la température (T1) des gaz chauds avant l'entrée dans la partie basse de la colonne de réaction et la température (T2) des matériaux se trouvant dans la zone située au-dessus de la grille de la colonne du réacteur, et la comparaison relative en continu desdites températures (T1 - T2), et **en ce que** lorsque les températures des gaz d'introduction (T1) et celle (T2) mesurée dans une tranche de quelques centimètres de matériaux situés au-dessus de la grille, sont identiques, correspondant à la situation d'évacuation de tous les liens organiques des matériaux par évaporation et transport par les gaz chauds de bas en haut dans la colonne, on procède à l'évacuation de ladite tranche de matériau à ladite température (T2) pour collecter un produit composé en grande partie de carbone et constituant une matière première secondaire.

2. Procédé selon la revendication 1, caractérisé en que l'opération de distillation des matériaux s'effectue selon un cycle en continu et progressif alternatif incluant des phases de re-condensation ou de réchauffage et fragmentation des molécules organiques, lesdites molécules organiques devenant de plus en plus légères pour s'évacuer vers le haut de la colonne de réaction.

3. Procédé selon la revendication 2, caractérisé en que la tranche de matériau se situant dans la colonne de réaction en contact avec la grille est minéralisée par évaporation de ses composants organiques, et en ce que pendant les phases opératoires du procédé de distillation au sein de la colonne, les molécules organiques évaporées sont entraînées par le flux de gaz chauds vers le haut de la colonne et se trouvant à des températures plus faibles les amenant à se re-condenser, et en ce que l'évacuation de la tranche inférieure de matériau minéralisé va entraîner dans la colonne de réaction des matériaux avec une nouvelle période de réchauffage et de fragmentation des molécules organiques, qui deviennent sur le cycle de plus en plus légères et fines, et en ce qu'on remplit la colonne de réaction d'une quantité nouvelle de matériau à traiter correspondant à celle évacuée.

4. Procédé, selon l'une quelconque des revendications 1 à 3, **caractérisé en ce qu'**il met en oeuvre une vanne (V) disposée dans la partie haute de la colonne de réaction, assurant la fonction de contrôle et de comparaison en continu de la différence de pression entre le haut et le bas de la colonne et, selon son réglage, permet d'augmenter la pression dans la partie basse de la colonne pour favoriser la stratification des couches de matériau.

5. Procédé selon la revendication 3, caractérisé en que les gaz en sortie de la colonne de réaction sont acheminés vers une zone de lavage et de séchage, lesdits gaz pouvant inclure des molécules organiques en phase gazeuse (hydrocarbures) issues de la phase de distillation.

6. Procédé selon la revendication 1, caractérisé en que l'épaisseur d'une tranche de matériau en contact avec la grille et pouvant se situer à une température (T2) égale à celle (T1) des gaz chauds d'introduction, est de l'ordre de 5 cm.

7. Procédé, selon l'une quelconque des revendications 1 à 6, caractérisé dans son application au recyclage des bois traités.

8. Procédé, selon l'une quelconque des revendications 1 à 6, caractérisé dans son application au traitement des déchets agricoles.

9. Procédé, selon l'une quelconque des revendications 1 à 6, caractérisé dans son application au traitement de la fiente des volailles.

10. Installation de mise en oeuvre du procédé selon l'une quelconque des revendications 1 à 6 du type mettant en oeuvre un réacteur composé d'une colonne (1) incluant de bas de haut de la colonne :
- un volume étanche équipé d'un système d'évacuation des produits minéralisés.
- une entrée des gaz chauds situés dans la partie basse 1A du réacteur,
- une grille (7) mobile permettant d'évacuer les produits carbonisés et d'organiser par effets ciseaux un écoulement vers le bas des produits minéralisés,
- une zone de refroidissement et de filtrage des gaz établie au-dessus de la zone de réaction,
- une entrée étanche d'alimentation de solides organiques broyés située dans la partie haute du réacteur,
- au même niveau de cette dernière, une sortie des gaz de combustion protégée par une grille destinée à éviter l'envol des copeaux et des moyens de répartition radiale uniforme des produits solides organiques broyés.
**caractérisée en ce qu'**elle inclut, dans la partie haute de la colonne, une vanne (V) intervenant dans le contrôle et la comparaison en continu de la différence de pression entre l'entrée et la sortie des gaz dans la colonne, et des moyens de mesure et de réglage selon un contrôle continu de la température (T1) des gaz chauds avant l'entrée dans la partie basse de la colonne du réacteur, et de la température (T2) des matériaux se trouvant dans la zone immédiatement au dessus de la grille, et **en ce qu'**elle inclut une grille (6) constituée de deux composants (7a - 7b), un composant fixe (7a) dans la partie basse de la colonne et un composant mobile (7b) située au dessus, en superposition en définissant un espace sous forme de coussin de gaz à lit fluidisé, lesdits composants (7a - 7b) ayant chacun des ouvertures (7a1 - 7b1) respectivement circulaires et oblongues pour autoriser le passage et écoulement des matériaux, et **en ce que** la colonne est conique avec partie réduite vers le haut.

## Patentansprüche

1. Verfahren zur Behandlung von organischen Feststoffen, bei dem die folgenden Phasen durchgeführt werden:
- Einführen von behandelten zerkleinerten Stoffen in Form von Schnitzeln in eine Reaktionseinheit, die eine Kolonne bildet;
- Aufheizen der Stoffe in dem unteren Teil der Reaktionskolonne in Auflage auf einem translatorisch bewegbaren Gitter und Abkühlung in ihrem oberen Bereich;
- Einführen von warmen Gasen mit geringem Gehalt an Sauerstoff in den unteren Bereich der Reaktionskolonne und Transport der Gase in der Reaktionskolonne mit einem Rezyklierkreis der Gase am Ausgang, wobei ein Generator für heißes Gas, ein Brenner, ein Auflader und eine Rückführung der rezyklierten Gase eingeschlossen sind;
- Entnahme von Mengen von behandelten Stoffen, die sich im Zustand von Kohlenstoffprodukten in dem unteren Teil der Reaktionskolonne befinden, durch die Steuerung des beweglichen Gitters;
**dadurch gekennzeichnet, dass** das Verfahren ein Vorgang der Destillation aus der Energie, die durch die heißen Gase im unteren Teil der Reaktionskolonne zugeführt wird, bei einer Temperatur (T1) zwischen 170° und 350°C, die die Funktion des Aufbrechens der organischen Bindungen in den Stoffen sicherstellt, durchführt und dass das Verfahren während des Vorgangs der Destillation eine konstante Steuerung zwischen der Temperatur (T1) der heißen Gase vor dem Eintritt in den unteren Teil der Reaktionskolonne und der Temperatur (T2) der Stoffe, die sich in der über dem Gitter der Reaktionskolonne befindenden Zone und den kontinuierlichen relativen Vergleich der Temperaturen (T1 - T2) durchführt, und dass, wenn die Temperatur der eingeführten Gase (T1) und diejenige (T2), die in einer Tranche der Stoffe von einigen Zentimetern, die sich über dem Gitter befinden, gemessen wird, identisch sind, entsprechend der Situation der Entfernung aller organischen Bindungen der Stoffe durch Verdampfen und Transport durch die heißen Gase von unten nach oben in der Kolonne, ein Austrag der Stofftranche bei der Temperatur (T2) durchgeführt wird, um ein Produkt zu sammeln, das zum großen Teil aus Kohlenstoff zusammengesetzt ist und einen Sekundärrohstoff bildet.

2. Verfahren nach Anspruch 1, **dadurch gekennzeichnet, dass** der Vorgang der Destillation der Materialien gemäß einem kontinuierlichen und fortschreitend wechselnden Zyklus erfolgt, der Phasen der Rekondensation oder der Erhitzung und Fragmentierung der organischen Moleküle einschließt, wobei die organischen Moleküle immer leichter werden, um nach oben in Bezug auf die Reaktionskolonne abgeführt zu werden.

3. Verfahren nach Anspruch 2, **dadurch gekennzeichnet, dass** die Stofftranche, die sich in der Reaktionskolonne in Kontakt mit dem Gitter befindet, durch die Verdampfung seiner organischen Bestandteile mineralisiert wird und dass während der operativen Phasen des Verfahrens der Destillation in der Kolonne die verdampften organischen Moleküle durch den Strom der heißen Gase in der Kolonne nach oben mitgezogen werden und sich bei geringeren Temperaturen befinden, die sie dazu bringen, sich zu rekondensieren, und dass der Austrag der unteren mineralisierten Stofftranche Stoffe mit einer neuen Periode der Erhitzung und der Fragmentierung der organischen Moleküle in der Reaktionskolonne bewirken wird, die während des Zyklus immer leichter und feiner werden, und dass die Reaktionskolonne mit einer neuen Menge an zu behandelnden Stoffen entsprechend der abgeführten Menge befüllt wird.

4. Verfahren nach einem beliebigen der Ansprüche 1 bis 3, **dadurch gekennzeichnet, dass** es ein Ventil (V) benutzt, das in dem oberen Teil der Reaktionskolonne angeordnet ist und das die Funktion der Steuerung und des kontinuierlichen Vergleichs der Druckdifferenz zwischen dem oberen und dem unteren Bereich der Kolonne sicherstellt und gemäß seiner Regelung eine Erhöhung des Drucks in dem unteren Teil der Kolonne ermöglicht, um die Schichtung der Stoffschichten zu fördern.

5. Verfahren nach Anspruch 3, **dadurch gekennzeichnet, dass** die Gase am Ausgang der Reaktionskolonne in eine Zone der Waschung und Trocknung gefördert werden, wobei die Gase organische Moleküle in Gasphase (Kohlenwasserstoffe) einschließen können, die von der Destillationsphase herrühren.

6. Verfahren nach Anspruch 1, **dadurch gekennzeichnet, dass** die Dicke einer Stofftranche, die in Kontakt mit dem Gitter ist und die sich bei einer Temperatur (T2) gleich der (T1) der eingeführten heißen Gase befinden kann, in der Größenordnung von 5 cm ist.

7. Verfahren nach einem beliebigen der Ansprüche 1 bis 6, in seiner Anwendung gekennzeichnet als Rezyklierung von behandelten Hölzern.

8. Verfahren nach einem beliebigen der Ansprüche 1 bis 6, in seiner Anwendung **gekennzeichnet durch** die Behandlung von Landwirtschaftsabfällen.

9. Verfahren nach einem beliebigen der Ansprüche 1 bis 6, in seiner Anwendung **gekennzeichnet durch** die Behandlung von Geflügelkot.

10. Anlage zum Durchführen des Verfahrens nach einem beliebigen der Ansprüche 1 bis 6, das einen aus einer Kolonne (1) bestehenden Reaktor verwendet, die von unten nach oben der Kolonne gesehen einschießt:
- ein abgedichtetes Volumen, das mit einem Austragsystem von mineralisierten Produkten ausgerüstet ist,
- einen Eintrittsanschluss für heiße Gase, der im unteren Bereich (1A) des Reaktors angeordnet ist,
- ein bewegliches Gitter (7), das den Austrag von kohlenstoffhaltigen Produkten und die Durchleitung eines Stroms von mineralisierten Produkten nach unten durch Scherenwirkung ermöglicht,
- eine Zone des Abkühlens und des Filterns der Gase, die über der Reaktionszone angeordnet ist,
- einen dichten Eintrittsanschluss für die Einspeisung von organischen zerkleinerten Feststoffen, der in dem oberen Bereich des Reaktors liegt,
- auf der gleichen Höhe mit Letzterem einen Austritt von Verbrennungsgasen, der durch ein Gitter geschützt ist, das vorgesehen ist, den Flug von Schnitzeln zu verhindern, und Mittel zur gleichmäßigen radialen Verteilung der zerkleinerten organischen Feststoffe,
**dadurch gekennzeichnet, dass** sie in dem oberen Bereich der Kolonne ein Ventil (V), das in die Steuerung und den kontinuierlichen Vergleich der Druckdifferenz zwischen dem Eintritt und dem Austritt der Gase in der Kolonne eingreift, und Mittel zur Messung und Regelung gemäß einer kontinuierlichen Steuerung der Temperatur (T1) der heißen Gase vor dem Eintritt in den unteren Bereich der Reaktionskolonne und der Temperatur (T2) der Stoffe, die sich in der Zone unmittelbar über dem Gitter befinden, einschließt, und dass sie ein Gitter (6) einschließt, das aus zwei Bestandteilen (7a - 7b) in Übereinanderlage zusammengesetzt ist, einem feststehenden Bestandteil (7a) in dem unteren Bereich der Kolonne und einem darüber liegenden beweglichen Bestandteil (7b), zwischen denen ein Raum in Form eines Gaskissens in Wirbelschicht definiert wird und die Bestandteile (7a - 7b) jeder jeweils kreisförmige und längliche Öffnungen (7a1-7b1) aufweisen, um den Durchgang und Durchfluss von Stoffen zuzulassen, und dass die Kolonne konisch mit sich nach oben verringerndem Bereich ist.

## Claims

1. Process for treating organic solid materials using the following phases:
• introducing crushed treated materials in the form of shavings into a column reaction unit;
• heating said materials in the bottom part of the reaction column supported on a displacement and cooling grate in its upper part;
• introducing hot gases of low oxygen content into the bottom part of the reaction column and moving the gases in the reaction column with a recycling circuit of the exiting gases including a generator of hot gases, a burner, a supercharger and a re-injection of the recycled gases;
• evacuating the quantities of treated materials present in the state of carbonised products in the bottom part of the reaction column by operation of the movable grate;
**characterised in that** the process implements a distillation operation working from the energy supplied by the hot gases at the bottom of the reaction column at a temperature (T1) of between 170° and 350°C, which ensures the activity of breaking the organic bonds in the materials, and **in that** as the distillation operation advances the process implements a constant control between the temperature (T1) of the hot gases before entering the bottom part of the reaction column and the temperature (T2) of the materials present in the zone located above the grate of the column of the reactor, and the continuous relative comparison of said temperatures (T1 - T2), and **in that** when the temperatures of the introduced gases (T1) and the temperature (T2) measured in a slice of a few centimetres of the materials located above the grate are identical, in keeping with the situation of evacuation of all the organic bonds of the materials by evaporation and movement by the hot gases from the bottom upwards in the column, said slice of material is evacuated at said temperature (T2) to obtain a product composed largely of carbon and forming a secondary raw material.

2. Process according to claim 1, **characterised in that** the operation of distilling the materials is conducted according to a continuous and progressive alternating cycle including phases of re-condensation or reheating and fragmentation of the organic molecules, wherein said organic molecules become increasingly lighter to discharge to the top of the reaction column.

3. Process according to claim 2, **characterised in that** the slice of material located in the reaction column in contact with the grate is mineralised by evaporation of its organic components, and **in that** during the operational phases of the distillation process within the column the evaporated organic molecules are carried to the top of the column by the hot gas flux and being in a location at lower temperatures causes them to re-condense, and **in that** the evacuation of the lower slice of mineralised material will carry materials into the reaction column with a new period of reheating and fragmentation of the organic molecules, which become increasingly lighter and finer over the cycle, and **in that** the reaction column is filled with a new quantity of material to be treated corresponding to that evacuated.

4. Process according to any one of claims 1 to 3, **characterised in that** it uses a valve (V) arranged in the top part of the reaction column assuring the function of controlling and continuously comparing the pressure difference between the top and the bottom of the column and in accordance with its adjustment allows the pressure in the bottom part of the column to be increased to promote stratification of the material layers.

5. Process according to claim 3, **characterised in that** the gases exiting the reaction column are directed towards a washing and drying zone, wherein said gases can include organic molecules in gaseous phase (hydrocarbons) resulting from the distillation phase.

6. Process according to claim 1, **characterised in that** the thickness of a slice of material in contact with the grate that can be at a temperature (T2) equal to that (T1) of the input hot gases is in the order of 5 cm.

7. Process according to any one of claims 1 to 6, **characterised by** its application to recycling treated woods.

8. Process according to any one of claims 1 to 6, **characterised by** its application to the treatment of agricultural wastes.

9. Process according to any one of claims 1 to 6, **characterised by** its application to the treatment of poultry droppings.

10. Installation for implementation of the process according to any one of claims 1 to 6 for utilising a reactor composed of a column (1) including from the bottom upwards of the column:
• a sealed space provided with an evacuation system for the mineralised products;
• an inlet for hot gases located in the bottom part (1A) of the reactor;
• a movable grate (7) enabling evacuation of the carbonised products and structuring a downward flow of the mineralised products by shearing actions;
• a cooling and filtering zone for the gases positioned above the reaction zone;
• a sealed feed inlet for crushed organic solids located in the top part of the reactor;
• at the same level and the latter, an outlet for combustion gases protected by a grate provided to prevent the shavings from dispersing and means for the uniform radial distribution of the crushed organic solid materials.
**characterised in that** it includes, in the top part of the column, a valve (V) assisting in the control and continuous comparison of the pressure difference between the entry and discharge of gases in the column, and measuring and adjusting means in accordance with a continuous control of the temperature (T1) of the hot gases before entering the bottom part of the column of the reactor and the temperature (T2) of the materials located in the zone immediately above the grate, and **in that** it includes a grate (6) formed from two components (7a - 7b): a fixed component (7a) in the bottom part of the column and a movable component (7b) located above in a superposed position to define a space in the form of a fluidised bed cushion of gas, wherein said components (7a - 7b) each have respectively circular and oblong openings (7a1 - 7b1) to allow the passage and flow of the materials, and **in that** the column is conical with an upwardly reduced part.
